# EUROPÄISCHE PATENTSCHRIFT

(11) **EP 2 655 239 B1**
(45) Veröffentlichungstag und Bekanntmachung des Hinweises auf die Patenterteilung: **09.03.2016**
(21) Anmeldenummer: 11802069.2
(22) Anmeldetag: 19.12.2011
(51) Int. Cl.: B66B 29/00

(54) **FÖRDEREINRICHTUNG FÜR PERSONEN UND/ODER GEGENSTÄNDE**
DEVICE FOR MOVING PEOPLE AND/OR OBJECTS
DISPOSITIF DE TRANSPORT DE PERSONNES ET/OU D'OBJETS

(30) Priorität: 22.12.2010 EP 10196575
(43) Veröffentlichungstag der Anmeldung: 30.10.2013
(73) Patentinhaber: Inventio AG, 6052 Hergiswil (CH)
(72) Erfinder: TROJER, Andreas, A-1230 Wien (AT); BLONDIAU, Dirk, A-1190 Wien (AT); MATHEISL, Michael, A-2331 Vösendorf (AT); SAILER, Paul, A-1160 Wien (AT)
(74) Vertreter: Hirschberger, Petra
(86) Internationale Anmeldenummer: PCT/EP2011/073193
(87) Internationale Veröffentlichungsnummer: WO 2012/084784

(56) Entgegenhaltungen:
- WO-A1-2004/014774
- DE-A1- 1 942 127
- US-A- 3 651 506
- US-A1- 2009 135 019

## Beschreibung

Die Erfindung betrifft eine Fördereinrichtung mit mindestens einem aus Förderelementen bestehenden Endlosförderer für Personen und/oder Gegenstände gemäss der Definition der unabhängigen Patentansprüche.

Aus der Schrift WO 2004/014774 ist eine Personenfördereinrichtung mit einem Handlauf bekannt geworden, wobei im Handlauf mindestens ein Transponder integriert ist. Eine in der Nähe des Handlaufs angeordnete Kommunikationseinrichtung weist einen Sender und einen Empfänger auf. Der Sender übermittelt dem Transponder Energie und Daten in Form von elektromagnetischen Wellen. Der Transponder übermittelt dem Empfänger Messdaten von physikalischen Parametern wie beispielsweise Temperatur oder Geschwindigkeit oder Beschleunigung des Handlaufes. Im Handlauf integrierte Transponder eignen sich lediglich für bandartige oder riemenartige Handläufe. Solche Handläufe können mit ein paar wenigen Transpondern überwacht werden. Für andersartige Handläufe sind sie aber ungeeignet.

US 365 15 06 A und DE 194 21 27 offenbaren alternative Vorrichtungen zur überwachung einen Handlauf einer Personenfördereinrichtung.

Mit der im Anspruch 1 beanspruchten Einrichtung wird die Aufgabe gelöst, aus Förderelementen bestehende Endlosförderer einer Fördereinrichtung für Personen und/oder Gegenständen mit einfachen Mitteln zu überwachen.

Vorteilhafte Weiterbildungen der Erfindung sind in den abhängigen Patentansprüchen angegeben.

Die durch die Erfindung erreichten Vorteile sind im wesentlichen darin zu sehen, dass metallische oder nichtmetallische Förderelemente eines Endlosförderers detektierbar sind. Die zu detektierenden Förderelemente sind beispielsweise Handlaufglieder, wobei ein Handlauf auch aus einem Handlaufglied bestehen kann, Stufen, Paletten oder Kettenglieder. Die Förderelemente bilden einen segmentierten Endlosförderer, beispielsweise einen Handlauf, ein Stufenband, ein Palettenband oder eine Transportkette für die Stufen oder die Paletten oder die Handlaufglieder. Weiter vorteilhaft ist, dass der zur Detektion der Förderelemente notwendige Sensor die Förderelemente auf sehr kurze Distanz detektiert. Dadurch baut die Überwachungseinrichtung kompakt und schlank. Die Übewachungseinrichtung detektiert jedes einzelne Förderelement und erzeugt daraus Betriebsgrössen wie beispielsweise Geschwindigkeit und/oder Beschleunigung/Verzögerung. Auch fehlende oder beschädigte Förderelemente sind detektierbar. In diesem Fall wird der betroffene Endlosförderer still gesetzt und/oder der Fehler alarmiert. Die Überwachungseinrichtung eignet sich auch zum Zählen von den segmentierten Endlosförderer bildenden Förderelementen.

Anhand der folgenden detaillierten Beschreibung und der beiliegenden Figuren wird die vorliegende Erfindung näher erläutert.

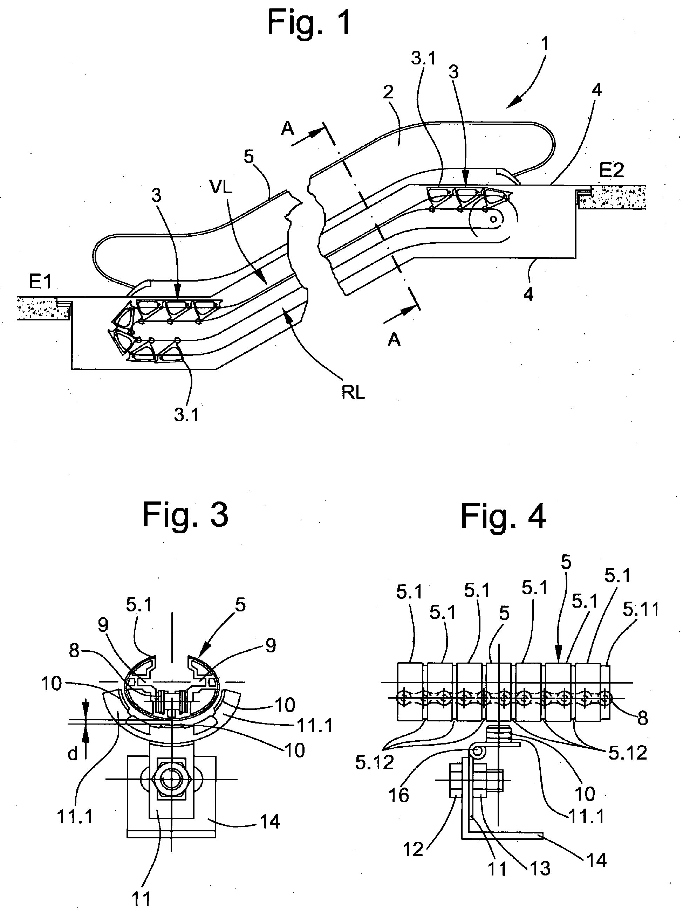

Es zeigen:
Fig. 1
   beispielsweise eine Fördereinrichtung für Personen und/oder Gegenstände,
Fig. 2
   einen Schnitt durch die Fördereinrichtung der Fig. 1 entlang der Linie A-A,
Fig. 3
   einen Querschnitt durch einen Handlauf im Rücklauf,
Fig. 4
   eine Seitenansicht des Handlaufes gemäss Fig. 3,
Fig. 5
   den Handlauf mit einem fehlenden Handlaufglied,
Fig. 6
   den Handlauf mit einem schadhaften Handlaufglied,
Fix. 7
   ein Blockschaltbild eines Schaltkreises zum Überwachen eines Endlosförderers,
Fig. 8
   eine elektrische Abbildung eines segmentierten, mit Handlaufgliedern versehenen Handlaufes,
Fig. 9 und Fig. 10
   eine elektrische Abbildung eines schadhaften Handlaufes,
Fig. 11, Fig. 12 und Fig. 13
   Ausgangssignale des Schaltkreises in Abhängigkeit des Betriebszustandes des Endlosförderers.

Im folgenden wird ein Ausführungsbeispiel einer Fördereinrichtung für Personen und/oder Gegenständen mit zu Endlosförderern zusammengefügten Förderelementen anhand einer Fahrtreppe mit Handlauf, Stufenband und Transportketten erläutert. Die Erläuterungen gelten sinngemäss auch für einen Fahrsteig mit Paletten oder einem Fördergurt. Bei einer Fahrtreppe ist ein Förderelement ein Handlaufglied, wobei ein Handlauf auch aus einem Handlaufglied bestehen kann, eine Stufe oder ein Kettenglied. Die Handlaufglieder bilden den Handlauf die Stufen bilden das Stufenband und die Kettenglieder bilden die Transportketten des Stufenbandes. Bei einem Fahrsteig ist ein Förderelement ein Handlaufglied, eine Palette oder ein Kettenglied. Die Handlaufglieder bilden den Handlauf, die Paletten bilden das Palettenband und die Kettenglieder bilden die Transportketten des Palettenbandes oder des Handlaufes.

Fig. 1 zeigt schematisch eine Fördereinrichtung am Beispiel einer Fahrtreppe 1 mit einer Balustrade 2 und mit einem Stufenband 3 mit Stufen 3.1 für den Transport von Personen und/oder Gegenständen im Vorlauf VL von einer ersten Etage E1 auf eine zweite Etage E2 oder umgekehrt. Im Rücklauf RL bewegt sich das endlose Stufenband 3 zurück. Ein Fachwerk 4 dient als Träger für das Stufenband 3 und die Balustrade 2 und ist an den Etagen E1, E2 abgestützt. Ein von der Balustrade 2 getragener Handlauf 5 dient im Vorlauf VL als Endlosförderer für die Hände der zu transportierenden Personen.

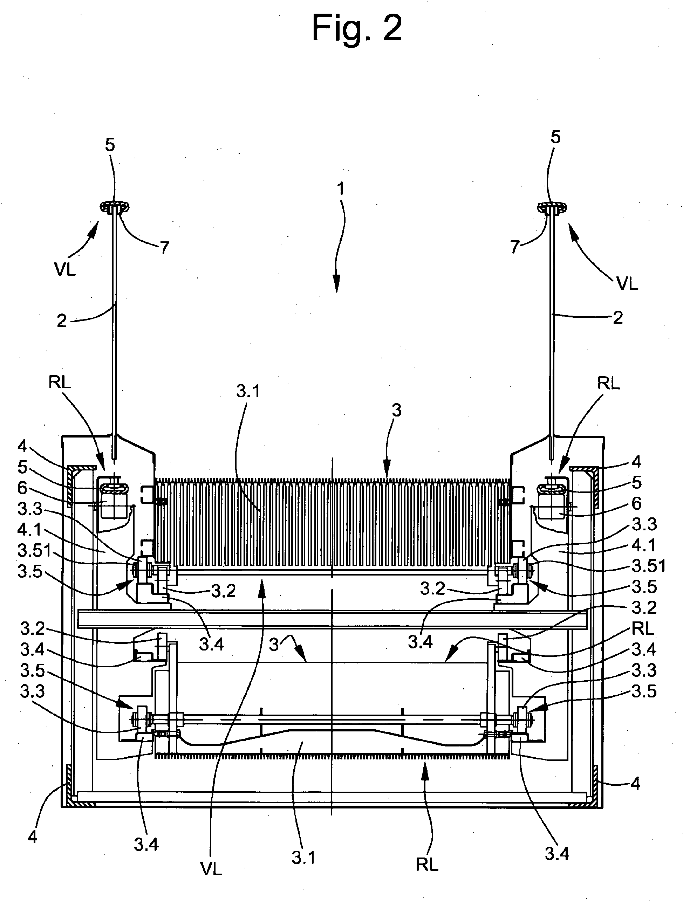

Fig. 2 zeigt einen Schnitt durch die Fördereinrichtung der Fig. 1 entlang der Linie A-A. Jede Stufe 3.1 weist Stufenrollen 3.2 und Kettenrollen 3.3 auf, wobei die Rollen 3.2, 3.3 an Führungen 3.4 abrollen. Die Führungen sind an Spanten 4.1 des Fachwerkes 4 angeordnet. Als Endlosförderer transportiert eine erste Transportkette 3.5 mit Kettengliedern 3.51 die Stufen 3.1 im Vorlauf VL und im Rücklauf RL. Der Handlauf 2 wird im Rücklauf RL mittels Rücklaufrollen 6 und im Vorlauf VL mittels erstem Führungsprofil 7 geführt.

Fig. 3 zeigt einen Querschnitt durch einen Handlauf 5 im Rücklauf RL, wobei der Handlauf 5 aus einzelnen, beispielsweise hohlkörperartigen Handlaufgliedern 5.1 aufgebaut ist. Die Handlaufglieder 5.1 werden mittels einer zweiten Transportkette 8 transportiert und an Führungsnuten 9 entlang der ersten Führungsprofile 7 der Balustrade 2 geführt. An einer Konsole 14 ist ein Bügel 11 mittels Schraube 12 und Mutter 13 befestigt, wobei am Bügel 11 beispielsweise ein Sensorträger 11.1 mit Sensoren 10 zur Überwachung der Handlaufglieder 5.1 angeordnet ist. Der Sensorträger 11.1 ist mit drei Sensoren 10 ausgerüstet, es können auch nur zwei oder nur ein Sensor vorgesehen sein.

Fig. 4 zeigt eine Seitenansicht des Handlaufes 5 gemäss Fig. 3, wobei die Handlaufglieder 5.1 am Sensorträger 11.1 vorbeibewegt werden. Der besseren Sichtbarkeit des überwachten Handlaufgliedes 5.1 wegen ist in den Fig. 4 bis 6 der in Fig. 3 gezeigte Sensorträger 11.1 nicht vollständig gezeichnet. Am Bügel 11 ist ein Gelenk 16 vorgesehen, wobei ein beschädigtes Handlaufglied 5.1 mit vorstehenden Teilen den Sensorträger 11.1 wegschwenkt, dabei bleiben die Sensoren 10 unversehrt. Jedes

Handlaufglied 5.1 weist einen Kragen 5.11 auf, der in das benachbarte Handlaufglied 5.1 hineinreicht. Die gelenkig an der zweiten Transportkette 8 befestigten Handlaufglieder 5.1 können sich gegenüber den benachbarten Handlaufgliedern 5.1 relativ bewegen, ohne dass sich dabei ein Spalt zwischen zwei benachbarten Handlaufgliedern 5.1 auftut. Zwischen zwei benachbarten Handlaufgliedern 5.1 ergibt sich lediglich eine Segmentrille 5.12 mit einer so geringen Tiefe, dass Finger nicht eingeklemmt werden. Die Segmentrille 5.12 weist beispielsweise eine Tiefe von etwa 2 mm bis 4 mm und eine Breite von etwa 4 mm bis 8 mm auf.

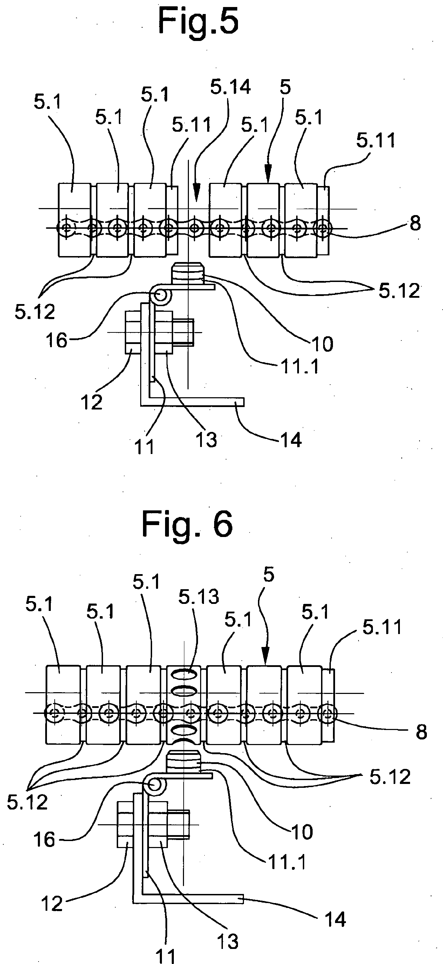

Fig. 5 zeigt den Handlauf 5 mit einem fehlenden Handlaufglied 5.1. Ein Handlaufglied 5.1 ist beispielsweise gebrochen und herausgefallen oder ist gewaltsam durch Vandalen entfernt worden. Die Sensoren 10 erfassen jedes vorhandene und auch jedes fehlende Handlaufglied 5.1.

Fig. 6 zeigt den Handlauf 5 mit einem schadhaften Handlaufglied 5.1. Bei einem Handlaufglied 5.1 sind beispielsweise Teile herausgebrochen oder gewaltsam durch Vandalismus entfernt worden. Die Sensoren 10 erfassen jedes vorhandene und auch jedes schadhafte Händlaufglied 5.1. Schadhafte Handlaufglieder 5.1 weisen beispielsweise Krater, Risse und/oder Löcher 5.13 auf.

Je nach Materialeigenschaften der Förderelemente kommen auf unterschiedlichen Wirkungsprinzipien arbeitende Sensoren 10 in Frage. Für die Überwachung eines segmentierten, aus Handlaufgliedern 5.1 gebildeten Handlaufes 5 oder für die Überwachung von aus Stufen 3.1 oder Paletten gebildeten Stufen-/Palettenbandes 3 oder für die Überwachung von einer aus Kettengliedern 3.51 gebildeten ersten Transportkette 3.5 oder einer zweiten Transportkette 8 eignen sich beispielsweise Antennen 10.1, deren Abstrahlcharakteristik durch die Nähe zur Antenne und durch die Segmentierung des Handlaufes 5 oder des Stufen-/Palettenbandes 3 oder der Transportketten 3.5, 8 veränderbar ist, wie unten noch im Detail ausgeführt ist. Auf dem Radarprinzip arbeitende Sensoren kommen auch in Frage, wobei eine Antenne elektromagnetische Signale zu den Endlosförderern mit Förderelementen sendet, wobei die Signale je nach Kontur der Endlosförderer reflektiert werden und die reflektierten Signale gemessen werden. Auf dem kapazitiven Prinzip arbeitende Sensoren sind auch möglich. Dabei wird die Kapazität eines Kondensators durch die Segmentierung der Endlosförderer verändert. Der Kondensator bildet zusammen mit einer Induktivität einen Schwingkreis, dessen Resonanzfrequenz sich abhängig von der Kondensatorkapazität verändert und die Frequenz eines Oszillators bestimmt.

Im Weiteren wird ein Sensor 10 mit einer Antenne 10.1 näher erläutert, deren Abstrahlcharakteristik durch die Nähe zur Antenne und durch die Segmentierung 5.12 eines Endlosförderers wie beispielsweise eines Handlaufes 5, eines Stufen-/Palettenbandes 3 oder einer Transportkette 3.5, 8 veränderbar ist.

Ein geringer Abstand, insbesondere im Nahfeld der Antenne 10.1, zwischen Antenne 10.1 und Förderelementen wie beispielsweise Handlaufglieder, Stufen-/Paletten, Kettenglieder, führt zu Störsignalen, die ein gewünschtes Nutzsignal überlagern. Im Fernfeld ergibt sich keine Wechselwirkung mit Gegenständen; die Antenne strahlt frei ab, wobei das Fernfeld wie folgt bestimmt ist: d/Lambda > 1. (d = Abstand der Antenne zum Endlosförderer, Lambda = Wellenlänge des mittels der Antenne abgestrahlten Signals).

Ein Gegenstand im Nahfeld verstimmt die Antenne und verändert ihren Widerstand, wobei das Nahfeld wie folgt bestimmt ist: d/Lambda < 1.

Der in Fig. 3 gezeigte Abstand d der Antenne 10.1 zum Handlaufglied 5.1 ist beispielsweise mit 1,5 mm bis 3,5 mm auf ein Nahfeld festgelegt, bei dem noch Risse mit beispielsweise einer Länge von etwa 5 mm und/oder Löcher 5.13 mit beispielsweise einem Durchmesser von etwa 5 mm exakt detektierbar sind. Löcher 5.13 und Risse verstimmen die Antenne 10.1 weniger als Aufwölbungen und abstehende Teile beispielsweise des Handlaufes 5. Als Sensor (10) wird eine im Hochfrequenzbereich arbeitende Antenne (10.1), beispielsweise eine handelsübliche 2,4 GHz WLAN Antenne verwendet. (WLAN bedeutet Wireless Local Area Network).

Epsilonᵣ ist eine Materialkonstante der Förderelemente und ist grösser als 1. (Epsilonᵣ für Vakuum gleich 1). Zwischenräume zwischen den Förderelementen, beispielsweise die Segmentrille 5.12 zwischen zwei benachbarten Handlaufgliedern 5.1 oder Schlitze zwischen zwei benachbarten Stufen oder Paletten oder stufenartige Übergänge von einem Kettenglied 3.51 zum benachbarten Kettenglied 3.51, bewirken eine Abfolge von Änderungen der Dielektrizitätszahl Epsilonᵣ. Beispielsweise beim segmentierten Handlauf besteht die Abfolge aus Handlaufglied - Segmentrille - Handlaufglied - Segmentrille - Handlaufglied ... etc., wobei ein Handlaufglied ein grösseres Epsilonᵣ aufweist als eine Segmentrille (Epsilonᵣ näher bei 1).

Vorteilhaft ist, dass eine Änderung des elektrischen Feldes im Nahfeld der Antenne 10.1 nutzbar ist. Änderungen der Dielektrizitätszahl Epsilonᵣ der in unmittelbarer Nähe der Antenne 10.1 sich befindenden Förderelemente, wie beispielsweise Handlaufglieder, Stufen-/Paletten, Kettenglieder, führen zu einer Verstimmung bzw. zu einer Änderung der Resonanzfrequenz der Antenne 10.1. Diese Änderungen rufen eine Energiereflexion hervor, die in der Zuleitung der Antenne messbar ist. Änderungen der Dielektrizitätszahl Epsilonᵣ in unmittelbarer Umgebung der Antenne 10.1 werden durch die an der Antenne vorbeigeführten Förderelemente verursacht.

Weiter vorteilhaft ist die kompakte Bauweise der Antenne und der kleine Abstand d der Antenne zu den Förderelementen.

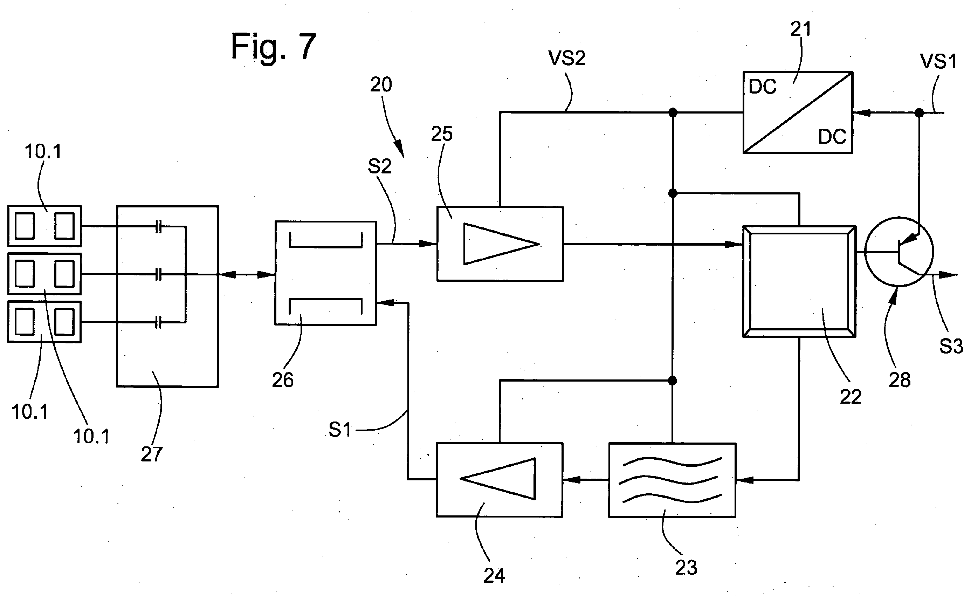

Fig. 7 zeigt ein Blockschaltbild eines Schaltkreises 20 zum Aufbereiten des vom Sensor 10 erzeugten Sensorsignals. Ein Spannungswandler 21 wird mit einer ersten Versorgungsspannung VS1, beispielsweise 24 V der Fahrtreppe 1, gespeist. Der Spannungswandler 21 erzeugt aus der ersten Versorgungsspannung VS1 eine zweite Versorgungsspannung VS2, beispielsweise 5 V, mit der eine Steuerung 22, ein Oszillator 23, ein Hochfrequenzverstärker 24 und ein Messwertverstärker 25 gespeist werden.

Die Steuerung 22 gibt eine der Antenne 10.1 entsprechende Frequenz vor, wobei der Oszillator 23 ein Signal mit dieser Frequenz und vorbestimmter Form und Amplitude, beispielsweise ein Sinussignal, erzeugt und dem Hochfrequenzverstärker 24 zufuhrt. Das verstärkte Hochfrequenzsignal S1 wird einem Messvierpol 26 und von diesem einem Antennenkoppler 27 zugeführt, an dem die am Sensorträger 11.1 angeordneten Antennen 10.1 angeschlossen sind. Ohne Gegenstände im Nahfeld der Antenne 10.1 wirkt die Antenne rein ohmisch (beispielsweise 50 Ohm) und die volle Energie des ersten Signals S1 wird ohne Reflexion abgestrahlt. Befinden sich Gegenstände wie oben erläutert im Nahfeld der Antenne 10.1, wird die Resonanzfrequenz der Antenne 10.1 durch die Wechselwirkung mit den Gegenständen verstimmt und ein Teil der Energie des ersten Signals S 1 wird von der Antenne 10.1 zum Messvierpol 26 reflektiert und erscheint als zweites, die Oberfläche des Endlosförderers abbildendes Signal S2 am Messvierpol 26. Das zweite Signal S2 wird dem Messwertverstärker 25 zugeführt. Dieser verstärkt das zweite Signal S2 und führt es der Steuerung 22 zur Auswertung zu.

Werden Endlosförderer ohne Kontur bzw. ohne von Auge sichtbare, schadhafte Stellen an der Oberfläche bzw. ohne Gliederstruktur bzw. ohne Segmentierung im Nahfeld der Antenne 10.1 an der Antenne 10.1 vorbeibewegt entsteht zwar ein zweites Signal S2, hier auch "Störsignal" genannt, aber ohne "Nutzsignal". Das dem Störsignal überlagerte Nutzsignal entsteht erst mit einer Änderung der Oberfläche des Endlosförderers bzw. mit der Konturierung des Endlosförderers bzw. mit von Auge sichtbaren Strukturen wie Löcher oder Risse oder Kerben oder Schlitze, etc. an der Oberfläche bzw. mit den Segmentrillen 5.12 der Handlaufglieder 5.1 bzw. mit den Schlitzen zwischen den Stufen bzw. mit den stufenartigen Übergängen von einem Kettenglied zum anderen, wobei die Änderung der Oberfläche des Endlosförderers eine Änderung der Abstrahlcharakteristik der Antenne bewirkt.

Mit dem Sensor 10 sind von Auge sichtbare Änderungen der Oberfläche des Endlosförderers erkennbar wie beispielsweise Segmentrillen der Handlaufglieder, mit Schlitzen versehener, nicht segmentierter Handlauf, mit Rissen versehener, nicht segmentierter Handlauf, schadhafte Handlaufglieder mit Löchern und/oder Rissen, fehlende Handlaufglieder, fehlende Stufen oder Paletten, stufenartige Übergänge von einem Kettenglied zum anderen, fehlende Kettenglieder, vorstehende Teile des Endlosförderers, Schlitze zwischen Förderelementen, etc..

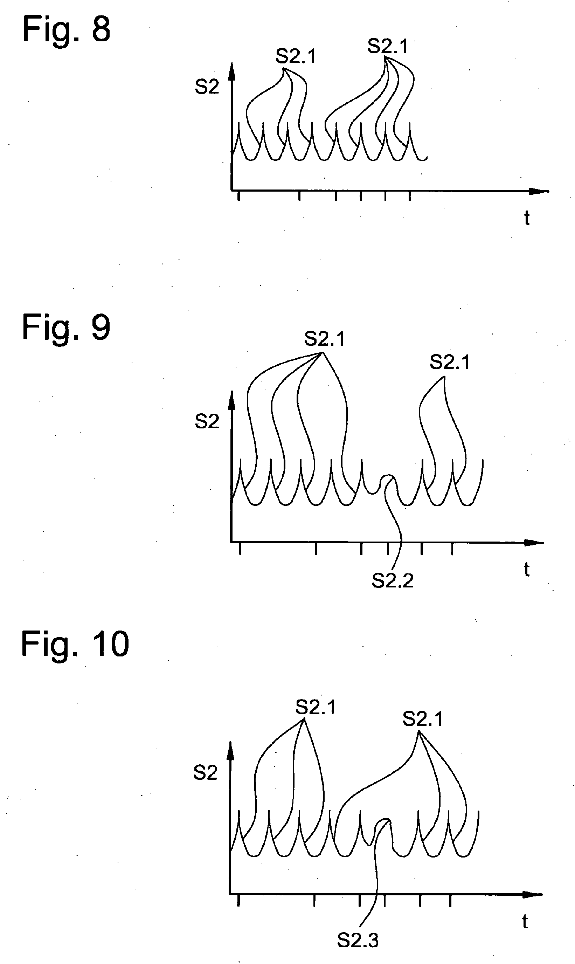

Fig. 8 zeigt eine elektrische Abbildung eines segmentierten, mit Handlaufgliedern 5.1 versehenen Handlaufes 5 gemäss Fig. 4. Das zweite Signal S2 ist in Funktion der Zeit t dargestellt. Der intakte, an der Antenne 10.1 vorbeibewegte Handlauf 5 erzeugt mit jeder Segmentrille 5.12 ein dem Störsignal überlagertes, wellenförmiges Nutzsignal S2.1, wobei jede Welle S2.1 von der Steuerung 22 erfasst wird.

Zur Unterdrückung von Störeinwirkungen werden aus den zuletzt gemessenen Wellen S2.1 (beispielsweise aus den letzten 64 gemessenen Wellen) von der Steuerung 22 ein Mittelwert gebildet und der Mittelwert mit dem Messwert der aktuellen Welle S2.1 verglichen. Liegt die Abweichung des aktuellen Messwertes vom Mittelwert innerhalb eines bestimmten Toleranzbandes, gilt das aktuell gemessene Handlaufglied 5.1 als intakt.

Fig. 9 zeigt eine elektrische Abbildung eines segmentierten, mit Handlaufgliedern 5.1 versehenen Handlaufes 5 gemäss Fig. 5 mit einem fehlenden Handlaufglied 5.1. Das zweite Signal S2 ist in Funktion der Zeit t dargestellt. Das fehlende Handlaufglied 5.1 bildet die zugehörige Signalwelle S2.2 nur verkümmert aus. Die Steuerung 22 erkennt die schadhafte Stelle und erzeugt ein Fehlersignal.

Fig. 10 zeigt eine elektrische Abbildung eines segmentierten, mit Handlaufgliedern 5.1 versehenen Handlaufes 5 gemäss Fig. 6 mit einem mit Löchern 5.13 und/oder Rissen versehenen Handlaufglied 5.1. Das zweite Signal S2 ist in Funktion der Zeit t dargestellt. Das schadhafte Handlaufglied 5.1 bildet die zugehörige Signalwelle S2.3 nur verkümmert aus. Die Steuerung 22 erkennt die schadhafte Stelle und erzeugt ein Fehlersignal.

Die Steuerung 22 der Fig. 7 erzeugt mittels einer Ausgangsstufe 28 ein dem Betriebszustand des Endlosförderers entsprechendes drittes Signal S3. Die Ausgangsstufe kann beispielsweise einen Halbleiterschalter, einen Optokoppler oder ein Bussystem enthalten.

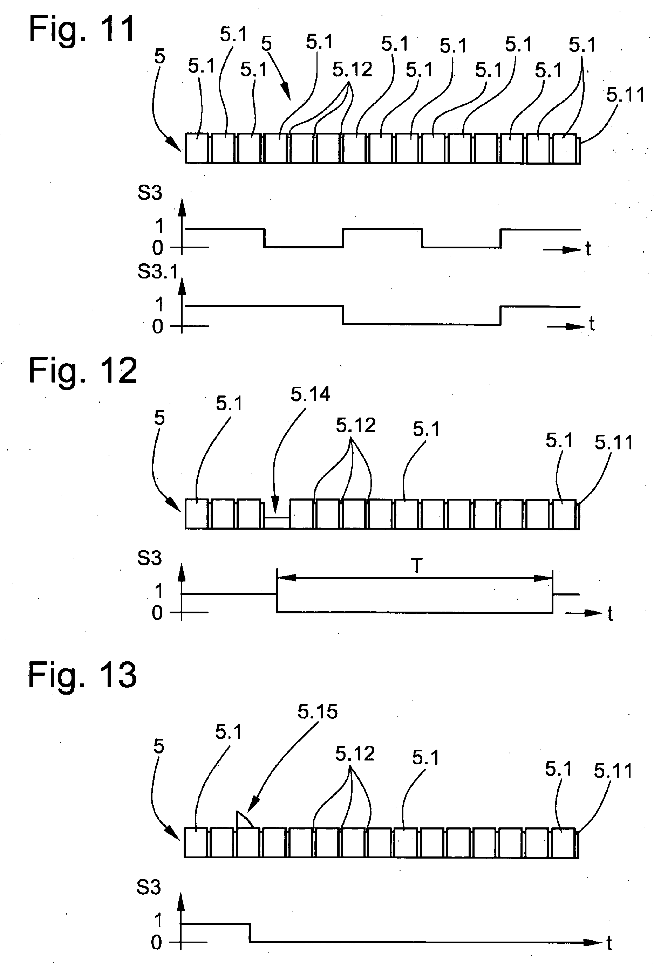

Fig. 11 zeigt einen Endlosförderer am Beispiel des segmentierten Handlaufes 5 mit Handlaufgliedern 5.1. Der Handlauf erzeugt bei Nenngeschwindigkeit das gezeigte Signal S3 in Funktion der Zeit t. Das Signal S3 wechselt beispielsweise nach jedem dritten Handlaufglied 5.1 von logisch 0 auf logisch 1 und umgekehrt. Bei beispielsweise halber Geschwindigkeit wird das Signal S3.1 in Funktion der Zeit t erzeugt. Das Signal S3, 53.1 wird beispielsweise der Fahrtreppensteuerung zur Geschwindigkeitsregelung und/oder zur Geschwindigkeitsüberwachung zugeführt. Aus der Anzahl Impulse pro Zeiteinheit werden Betriebsgrössen wie beispielsweise Fördergeschwindigkeit, Beschleunigung beim Anfahren oder Verzögerung beim Anhalten bestimmt.

Fig. 12 zeigt das Ausgangssignal S3 bei einem teilweise oder vollständig fehlenden Handläufglied 5.14 oder bei einem Handlaufglied 5.1 mit Rissen und/oder Löchern 5.13.
Das dritte Signal S3 wird für eine bestimmte Zeit T, beispielsweise 30 Sekunden, auf logisch 0 gesetzt. Die Fahrtreppensteuerung erkennt diesen Zustand und erzeugt mindestens eine entsprechende Fehlermeldung.

Fig. 13 zeigt den Handlauf 5 mit einem beschädigten Handlaufglied 5.1 mit vorstehenden Teilen 5.15, die den Sensorträger 11.1 über das Gelenk 16 wegschwenken, dabei bleiben die Sensoren 10 unversehrt. In der weggeschwenkten Lage kann der Sensor 10 keine Handlaufglieder 5.1 erkennen, das Signal S3 bleibt auf logisch 0. Die Fahrtreppensteuerung erkennt diesen Zustand, stoppt die Fahrtreppe 1 und erzeugt mindestens eine entsprechende Fehlermeldung.

## Patentansprüche

1. Fördereinrichtung (1) mit mindestens einem aus mindestens einem Förderelement (3.1, 3.51, 5.1) bestehenden Endlosförderer (3, 3.5, 5) für Personen und/oder Gegenstände, wobei mindestens ein Sensor (10) zur Erfassung einer Oberfläche des Endlosförderers (3, 3.5, 5) und ein Schaltkreis (20) zum Aufbereiten eines die Oberfläche abbildenden Sensorsignals vorgesehen sind, wobei aus dem aufbereiteten Sensorsignal Betriebsgrössen erzeugbar und/oder fehlende oder beschädigte Förderelemente (3.1, 3.51, 5.1) detektierbar sind, **dadurch gekennzeichnet, dass** der Sensor (10) eine im Hochfrequenzbereich arbeitende Antenne (10.1) ist und das Förderelement (3.1, 3.51, 5.1) im Nahfeld der Antenne (10.1) bewegbar ist.

2. Fördereinrichtung (1) nach Anspruch 1, wobei der Endlosförderer (3, 3.5, 5) segmentiert ist.

3. Fördereinrichtung (1) nach Anspruch 1, wobei der Endlosförderer (3, 3.5, 5) nicht segmentiert ist.

4. Fördereinrichtung nach einem der Ansprüche 1 bis 3, wobei ein Abstand (d) der Antenne (10.1) zu den Förderelementen (3.1, 3.51, 5.1) etwa 1,5 mm bis 3,5 mm ist.

5. Fördereinrichtung nach einem der Ansprüche 1 bis 4, wobei die Antenne (10.1) eine WLAN Antenne ist.

6. Fördereinrichtung nach Anspruch 5, wobei die Antenne (10.1) für 2,4 GHz konzipiert ist.

7. Fördereinrichtung nach einem der Ansprüche 1 bis 6, wobei die Antenne (10.1) durch vorstehende Teile (5.15) der Förderelemente (3.1, 3.51, 5.1) wegschwenkbar ist.

8. Verfahren zum Überwachen einer Fördereinrichtung (1) mit mindestens einem aus mindestens einem Förderelement (3.1, 3.51, 5.1) bestehenden Endlosförderer (3, 3.5, 5) für Personen und/oder Gegenstände, wobei mindestens ein Sensor (10) eine Oberfläche des Endlosförderers (3, 3.5, 5) erfasst und ein Schaltkreis (20) ein die Oberfläche abbildendes Sensorsignal aufbereitet und mittels dem aufbereiteten Sensorsignal Betriebsgrössen erzeugt und/oder fehlende oder beschädigte Förderelemente (3.1, 3.51, 5.1) detektiert werden können, **dadurch gekennzeichnet, dass** das Förderelement (3.1, 3.51, 5.1) im Nahfeld einer als Sensor (10) im Hochfrequenzbereich arbeitenden Antenne (10.1) bewegt wird.

9. Verfahren nach Anspruch 8, wobei der Schaltkreis (20) die Antenne (10.1) mit einem hochfrequenten Signal (S1) versorgt und die Antenne (10.1) ein Nutzsignal (S2) in Abhängigkeit der Oberfläche an den Schaltkreis (20) reflektiert.

10. Verfahren nach Anspruch 9, wobei der Schaltkreis (20) aus dem Nutzsignal (S2) Signale (S3) zur Bestimmung von Betriebsgrössen des Endlosförderers (3, 3.5, 5) erzeugt und/oder Signale (S3) zur Erkennung von gefährlichen Betriebszuständen des Endlosförderers (5) erzeugt.

11. Verfahren nach Anspruch 10, wobei die Betriebsgrössen beispielsweise Geschwindigkeit, Beschleunigung und/oder Verzögerung des Endlosförderers (3, 3.5, 5) sind und die gefährlichen Betriebszustände ausgelöst werden durch beispielsweise fehlende, schadhafte und/oder vorstehende Förderelemente (3.1, 3.51, 5.1).

## Claims

1. Conveyor equipment (1) with at least one endless conveyor (3, 3.5, 5), which comprises at least one conveyor element (3.1, 3.51, 5.1), for persons and/or objects, wherein at least one sensor (10) for detection of a surface of the endless conveyor (3, 3.5, 5) and at least one circuit (20) for preparing a sensor signal imaging the surface are provided, wherein operating variables can be generated and/or missing or damaged conveyor elements (3.1, 3.51, 5.1) can be detected from the prepared sensor signals, **characterised in that** the sensor (10) is an antenna (10.1) operating in the high-frequency range and the conveyor element (3.1, 3.51, 5.1) is movable in the near field of the antenna (10.1).

2. Conveyor equipment (1) according to claim 1, wherein the endless conveyor (3, 3.5, 5) is segmented.

3. Conveyor equipment (1) according to claim 1, wherein the endless conveyor (3, 3.5, 5) is non-segmented.

4. Conveyor equipment according to any one of claims 1 to 3, wherein a spacing (d) of the antenna (10.1) from the conveyor elements (3.1, 3.51, 5.1) is approximately 1.5 millimetres to 3.5 millimetres.

5. Conveyor equipment according to any one of claims 1 to 4, wherein the antenna (10.1) is an WLAN antenna.

6. Conveyor equipment according to claim 5, wherein the antenna (10.1) is conceived for 2.4 GHz.

7. Conveyor equipment according to any one of claims 1 to 6, wherein the antenna (10.1) is pivotably deflectable by protruding parts (5.15) of the conveyor elements (3.1, 3.51,5.1).

8. Method of monitoring conveyor equipment (1) with at least one endless conveyor (3, 3.5, 5), which comprises at least one conveyor element (3.1, 3.51, 5.1), for persons and/or objects, wherein at least one sensor (10) detects a surface of the endless conveyor (3, 3.5, 5) and at least one circuit (20) compares a sensor signal imaging the surface and by means of the prepared sensor signal operating parameters can be generated and/or missing or damaged conveyor elements (3.1, 3.51, 5.1) detected, **characterised in that** the conveyor element (3.1, 3.51, 5.1) is moved in the near field of an antenna (10.1) operating as a sensor (10) in the high-frequency range.

9. Method according to claim 8, wherein the circuit (20) supplies the antenna (10.1) with a high-frequency signal (S1) and the antenna (10.1) reflects a useful signal (S2) to the circuit (20) in dependence on the surface.

10. Method according to claim 9, wherein the circuit (20) generates from the useful signal (S2) signals (S3) for determining operating parameters of the endless conveyor (3, 3.5, 5) and/or signals (S3) for recognition of risk-laden operational states of the endless conveyor (5).

11. Method according to claim 10, wherein the operating parameters are, for example, speed, acceleration and/or deceleration of the endless conveyor (3, 3.5, 5) and the risk-laden operational states are triggered by, for example, missing, damaged and/or protruding conveyor elements (3.1, 3.51, 5.1).

## Revendications

1. Dispositif de transport (1) avec au moins un transporteur sans fin (3, 3.5, 5), composé d'au moins un élément transporteur (3.1, 3.51, 5.1), pour des personnes et/ou des objets, étant précisé qu'il est prévu au moins un capteur (10) pour détecter une surface du transporteur sans fin (3, 3.5, 5), et un circuit (20) pour traiter un signal de capteur représentant ladite surface, et qu'à partir du signal de capteur traité, des grandeurs de fonctionnement peuvent être générées et/ou des éléments transporteurs (3.1, 3.51, 5.1) manquants ou endommagés peuvent être détectés, **caractérisé en ce que** le capteur (10) est une antenne (10.1) qui fonctionne dans la plage haute fréquence, et l'élément transporteur (3.1, 3.51, 5.1) est mobile dans le champ proche de l'antenne (10.1).

2. Dispositif de transport (1) selon la revendication 1, étant précisé que le transporteur sans fin (3, 3.5, 5) est segmenté.

3. Dispositif de transport (1) selon la revendication 1, étant précisé que le transporteur sans fin (3, 3.5, 5) n'est pas segmenté.

4. Dispositif de transport selon l'une des revendications 1 à 3, étant précisé qu'une distance (d) entre l'antenne (10.1) et les éléments transporteurs (3.1, 3.51, 5.1) est d'environ 1,5 mm à 3,5 mm.

5. Dispositif de transport selon l'une des revendications 1 à 4, étant précisé que l'antenne (10.1) est une antenne WLAN.

6. Dispositif de transport selon la revendication 5, étant précisé que l'antenne (10.1) est conçue pour 2,4 GHz.

7. Dispositif de transport selon l'une des revendications 1 à 6, étant précisé que l'antenne (10.1) est apte à être éloignée par pivotement grâce à des éléments saillants (5.15) des éléments transporteurs (3.1, 3.51, 5.1).

8. Procédé pour surveiller un dispositif transporteur (1) avec au moins un transporteur sans fin (3, 3.5, 5), composé d'au moins un élément transporteur (3.1, 3.51, 5.1), pour des personnes et/ou des objets, étant précisé qu'au moins un capteur (10) détecte une surface du transporteur sans fin (3, 3.5, 5) et qu'un circuit (20) traite un signal de capteur représentant ladite surface, et qu'à l'aide du signal de capteur traité, des grandeurs de fonctionnement peuvent être générées et/ou des éléments transporteurs (3.1, 3.51, 5.1) manquants ou endommagés peuvent être détectés, **caractérisé en ce que** l'élément transporteur (3.1, 3.51, 5.1) est déplacé dans le champ proche d'une antenne (10.1) qui fonctionne comme capteur (10) dans la plage haute fréquence.

9. Procédé selon la revendication 8, étant précisé que le circuit (20) alimente l'antenne (10.1) avec un signal haute fréquence (S1) et que l'antenne (10.1) réfléchit vers le circuit (20) un signal utile (S2) en fonction de la surface.

10. Procédé selon la revendication 9, étant précisé que le circuit (20), à partir du signal utile (S2), génère des signaux (S3) pour définir des grandeurs de fonctionnement du transporteur sans fin (3, 3.5, 5) et/ou génère des signaux (S3) pour identifier des états de fonctionnement dangereux du transporteur sans fin (5).

11. Procédé selon la revendication 10, étant précisé que les grandeurs de fonctionnement sont par exemple la vitesse, l'accélération et/ou le ralentissement du transporteur sans fin (3, 3.5, 5), et les états de fonctionnement dangereux sont déclenchés par des éléments transporteurs (3.1, 3.51, 5.10) par exemple manquants, défectueux et/ou saillants.
